# EUROPÄISCHE PATENTSCHRIFT

(11) **EP 2 350 487 B1**
(45) Veröffentlichungstag und Bekanntmachung des Hinweises auf die Patenterteilung: **10.05.2017**
(21) Anmeldenummer: 09753048.9
(22) Anmeldetag: 16.11.2009
(51) Int. Cl.: F16D 65/095, F16B 4/00

(54) **SCHEIBENBREMSANORDNUNG**
DISK BRAKE ASSEMBLY
ENSEMBLE FREIN À DISQUE

(30) Priorität: 25.11.2008 DE 102008058975
(43) Veröffentlichungstag der Anmeldung: 03.08.2011
(73) Patentinhaber: Lucas Automotive GmbH, 56070 Koblenz (DE)
(72) Erfinder: ZENZEN, Guido, 56290 Macken (DE); BECKER, Marco, 56651 Oberdürenbach (DE)
(74) Vertreter: Thum, Bernhard
(86) Internationale Anmeldenummer: PCT/EP2009/008149
(87) Internationale Veröffentlichungsnummer: WO 2010/060551

(56) Entgegenhaltungen:
- EP-A1- 0 661 474
- DE-A1- 1 935 863
- DE-A1- 3 825 101
- DE-A1- 4 115 064
- DE-A1- 10 149 572
- FR-A1- 2 632 365
- GB-A- 1 570 215

## Beschreibung

Die Erfindung betrifft eine Scheibenbremsanordnung mit einem Bremsträger zur Befestigung an einem Fahrzeug sowie einer Bremsbelaganordnung. Der Bremsträger weist wenigstens eine Aufnahmeöffnung zur Aufnahme eines Führungselements auf, das einen ersten Abschnitt zum Führen und Abstützen der Bremsbelaganordnung und einen zweiten Abschnitt zum Verbinden mit einem Bremsträger hat.

Derartige Anordnungen einer Scheibenbremse sind aus dem Stand der Technik wohlbekannt. So zeigen beispielsweise die Dokumente DE 103 12 478 A1, DE 103 12 479 A1 und DE 103 12 480 A1 eine derartige Scheibenbremse mit einem am Fahrzeug befestigbaren Bremsträger, der mit Bolzen auf der Einlaufseite und auf der Auslaufseite der Bremse versehen ist, die beim Bremsen die auf die Bremsbeläge wirkenden Kräfte aufnehmen. Die beschriebenen Bolzen sind hierzu als Bolzenschrauben ausgebildet, die in ein passendes Innengewinde im Bremsträger eingeschraubt sind, um eine feste Verbindung mit dem Bremsträger zu gewährleisten. Weiterhin ist beschrieben, dass die Bolzenschrauben über einen Teil ihrer Längserstreckung mit einem Außengewinde versehen sind, welches zum Einschrauben in das korrespondierende Innengewinde im Bremsträger dient, und einen zusätzlichen Abschnitt aufweist, der gewindefrei ausgebildet ist. Letzterer dient zur Auflage und Abstützung der Bremsbeläge.

DE 38 25 101 A1 offenbart eine Teilbelag-Scheibenbremse mit einem Bremsgehäuse, in dem zwei Bremsbeläge mittels Stiften gehalten und geführt sind. Die Stifte sind als hohle Spannstifte mit einem Längsschlitz ausgeführt.

DE 1 935 863 offenbart eine Teilbelag-Scheibenbremse mit einem Bremssattel und Bremsbacken mit Rückenplatten, wobei die Rückenplatten an Belaghaltestiften geführt sind und die Belaghaltestifte in Bohrungen im Bremssattel gehalten sind. Die Haltestifte sind einstückig und als Federspannhülse ausgebildet und weisen einen Längsschlitz auf.

DE 41 15 064 A1 offenbart eine Festsattel-Teilbelagscheibenbremse mit einem Festsattel, an dem senkrecht zur Bremsscheibenebene verlaufende Bolzen aus einem hochfesten Material verankert sind.

Wie allgemein bekannt ist, besteht jedoch bei einfachen Schraubverbindungen grundsätzlich immer das Risiko, dass diese sich selbständig lösen, wenn keine zusätzlichen Sicherungsvorrichtungen vorgesehen sind. Schraubverbindungen aller Art sollen die darüber verbundenen Bauteile mit einer bestimmten Kraft zusammenklemmen und während der gesamten Betriebszeit eine genügend große Klemmkraft erhalten. Die Reibung im Gewinde und an den Kopfauflageflächen des Schraubenkopfes gewährleistet hierbei eine Selbsthemmung, so dass sich ordnungsgemäß angezogene Schraubverbindungen auch unter schwingenden oder stoßartigen Betriebskräften nicht von selbst lösen können.

Beim Anziehen der Schrauben werden deren Gewindeflanken und alle Trennflächen der zu verbindenden Bauteile stark aufeinandergepresst, so dass sich deren Oberflächenrauhigkeiten einebnen, geringfügig auch noch nach der Montage. Im Laufe der Zeit macht sich zudem ein Kriechen der in der Schraubverbindung beanspruchten Werkstoffe bemerkbar. Diese Vorgänge führen insgesamt zum Nachlassen der Klemmkraft, das man als Lockern oder Setzen bezeichnet. Sobald eine äußere Kraft beispielsweise in Form schwingender Belastungskräfte auf eine derartige Verbindung einwirkt, die größer als die vorhandene Klemmkraft ist, lösen sich die Schrauben und Muttern von selbst. Um dem entgegenzuwirken, werden bei derartigen aus dem Stand der Technik bekannten Schraubverbindungen zusätzliche Sicherungselemente eingesetzt, so dass sichergestellt werden kann, dass ein Lösen der Schraubverbindung infolge des Setzverhaltens der Schraube weitestgehend ausgeschlossen ist. So ist beispielsweise bekannt, die Bolzenschrauben bekannter Scheibenbremsanordnungen mit einem speziellen Gewinde, einem sogenannten Powerlock-Gewinde, zu versehen oder zusätzliche Sicherungsscheiben oder Sicherungsstifte, die quer in die Schraubverbindung eingesetzt werden, zu verwenden. Durch derartige zusätzliche Sicherungsmaßnahmen werden jedoch auch die Herstellungskosten einer derartigen Scheibenbremsanordnung erhöht. So sind zusätzliche Elemente als solche auch zusätzlich herzustellen oder einzukaufen, zu bevorraten und zu montieren.

Ein weiterer Nachteil, der in Zusammenhang mit derartigen Bolzenschrauben als Führungsmittel bekannt geworden ist, besteht darin, dass ein passgenaues Gewinde in die Aufnahmebohrung am Bremsträger eingeschnitten werden muss. Ist das Gewinde nicht korrekt eingeschnitten, führt dies zu einem erhöhten Ausschuss bzw. zu Nacharbeit, um das Gewinde an die einzusetzenden Bolzenschrauben anzupassen.

Die Aufgabe der Erfindung besteht darin, Führungselemente bereitzustellen, deren Montage und Herstellung einfach und kostengünstig erfolgen kann.

Die Aufgabe der vorliegenden Erfindung wird dadurch gelöst, dass der zweite Abschnitt eines Führungselements eine strukturierte Oberfläche aufweist, mit der das Führungselement wenigstens teilweise in die Aufnahmeöffnung einpressbar ist.

Dadurch, dass das Führungselement nicht in die Aufnahmeöffnung eingeschraubt, sondern eingepresst wird, ist die Notwendigkeit, ein passgenaues Innengewinde an der Aufnahmeöffnung des Bremsträgers vorzusehen, nicht mehr gegeben. Hierdurch kann eine erhebliche Kosteneinsparung erzielt werden, da sowohl die hierzu notwendigen Werkzeuge und Arbeitsschritte eingespart werden können als auch der Anteil an produziertem Ausschuss aufgrund eines nicht passgenauen Gewindegangs verringert werden kann und die Taktzeiten durch Wegfall eines Fertigungsschritts erhöht werden können.

Darüber hinaus bietet die Tatsache, dass der zweite Abschnitt eine strukturierte Oberfläche aufweist, gegenüber allgemein aus dem Stand der Technik bekannten Pressverbindungen den deutlichen Vorteil, dass die für Pressverbindung charakteristischen hohen Anforderungen an die Maßgenauigkeit und Oberflächengüte der Verbindungspartner einer derartigen Pressverbindung deutlich herabgesetzt werden können. So ist es im Unterschied zum Stand der Technik nicht notwendig, die Aufnahmebohrung zu glätten bzw. zu hohnen und die darin aufzunehmenden Einpresselemente glattflächig zu schleifen, was einen enorm hohen Fertigungsaufwand bedeuten und zu hohen Kosten führen würde. Stattdessen wird durch die strukturierte Oberfläche in gewissen Grenzen eine Deformierarbeit ermöglicht und dadurch eine erhöhte Maßtoleranz erreicht, bei der Oberflächenrauhigkeiten, die beispielsweise aus einem Gießprozess zum Herstellen des Bremsträgers resultieren können, ausgeglichen werden können.

Die strukturierte Oberfläche des zweiten Abschnitts des Führungselements umfasst dabei vorzugsweise eine Struktur, die im makroskopischen Bereich sichtbar ist.

In einer Weiterbildung der Erfindung weist das Führungselement einen im Wesentlichen kreisförmigen achsorthogonalen Querschnitt auf. Diese Form des Führungselements bietet den Vorteil, dass dieses einfach herstellbar ist und bei dem Einpressvorgang aufgrund seines rotationssymmetrischen Querschnitts in jeder um die Längsachse des Führungselements gedrehten Position in die Aufnahmeöffnung des Bremsträgers eingepresst werden kann.

Die strukturierte Oberfläche des zweiten Abschnitts weist Rillen auf, die quer zu der Einpressrichtung des Führungselements angeordnet sind. Die Einpressrichtung bezeichnet dabei die Richtung, in der das Führungselement in die Aufnahmeöffnung eingepresst wird. Diese entspricht im Wesentlichen in ihrer Orientierung der Längsachse des Führungselements.

Diese quer zu der Einpressrichtung des Führungselements verlaufenden, an dem zweiten Abschnitt angeordneten Rillen dienen hierbei insbesondere der Sicherung des Führungselements in der Aufnahmeöffnung gegen ein Herausrutschen. So wird das Material der Aufnahmeöffnung während des Einpressvorgangs elastisch nach außen gedrückt bzw. beginnt zu fließen und federt bzw. fließt bei fortschreitendem Einpressweg in die benachbarten Querrillen zurück. Dadurch wird ein axial wirkender Widerstand gegen ein Herausfallen des Führungselements aus der Aufnahmeöffnung erreicht.

Die quer zu der Einpressrichtung verlaufenden Rillen können als umlaufende Rillen oder auch nur als Teilrillen, die über einen bestimmten Winkelabschnitt kleiner als 360° über die Oberfläche des Führungselements verlaufen, ausgebildet sein. In einer bevorzugten Ausführungsform der Erfindung verlaufen die Rillen in einem rechten Winkel zu der Einpressrichtung des Führungselements. Jedoch kann alternativ auch vorteilhaft sein, dass die Rillen in einem davon abweichenden Winkel quer zu der Einpressrichtung des Führungselements angeordnet sind. Die Rillen können ferner parallel zueinander ausgerichtet sein oder in unterschiedlichen Winkeln quer zu der Einpressrichtung des Führungselements verlaufen.

Weiterhin ist zu beachten, dass die Rillen im Querschnitt betrachtet unterschiedliche Profilierungen aufweisen können. So ist beispielsweise denkbar, dass der Rillengrund wie auch der Übergang zwischen den Rillen und der Außenumfangsfläche des zweiten Abschnitts abgerundet oder eckig ausgebildet ist.

In einer bevorzugten Ausführungsform der Erfindung sind mehrere parallel zueinander angeordnete Rillen ausgebildet, die ringförmig in Umfangsrichtung an der strukturierten Oberfläche des zweiten Abschnitts verlaufen.

Weiterhin kann vorgesehen sein, dass die strukturierte Oberfläche des zweiten Abschnitts Rillen aufweist, die parallel zu der Einpressrichtung des Führungselements angeordnet sind. Derartige Rillen haben den Vorteil, dass durch diese die reibungserzeugende Oberfläche des zweiten Abschnitts des Führungselements während der Einpressbewegung gegenüber einer vollkommen glatten Oberfläche reduziert ist, wodurch eine erleichterte Einpressbewegung ermöglicht wird.

Die parallel verlaufenden Rillen "graben" oder "furchen" sich während des Einpressvorgangs in das Material der Aufnahmeöffnung ein. Dadurch wirken sie als Führungshilfe und bewirken, dass während der Einpressbewegung eine zusätzliche rotatorische Bewegung um die Längsachse des Führungselements nicht auftritt, so dass die gesamte zum Einpressen des Führungselements aufgebrachte Einpresskraft zum axialen Einpressen des Führungselements genutzt werden kann.

Die weiteren Ausführungsmöglichkeiten, die im Zusammenhang mit der Rillenprofilierung der querverlaufenden Rillen genannt wurden, gelten ebenfalls für die parallel zu der Einpressrichtung des Führungselements angeordneten Rillen.

Um insbesondere eine automatisierte Montage des Führungselements zu ermöglichen, kann weiter vorgesehen sein, dass das Führungselement an einem in der Einpressrichtung betrachteten hinteren (nachlaufenden) Ende einen umlaufenden Bund aufweist. Sobald dieser Bund in Anlage mit dem Bremsträger gelangt, kommt es zu einem sprungartigen Anstieg der Montagekraft, der von einem automatisierten System registriert werden kann und zu einer Beendigung des Montageschrittes führt. Auf diese Weise kann sichergestellt werden, dass auch bei einem automatisierten Verfahren zur Montage der Führungselemente, diese vollständig in der Aufnahmeöffnung des Bremsträgers aufgenommen werden. Zudem verhindert ein derartiger umlaufender Bund, dass das Führungselement während der Lebensdauer der Scheibenbremsanordnung sich in Richtung der Bremsscheibe bzw. der Bremsbelaganordnung verschiebt.

In einer bevorzugten Ausführungsform kann vorgesehen sein, dass der zweite Abschnitt wenigstens einen in der Einpressrichtung vorderen Bereich und einen hinteren Bereich aufweist, wobei die strukturierte Oberfläche des vorderen Bereichs Rillen aufweist, die parallel zu der Einpressrichtung des Führungselements angeordnet sind, während die strukturierte Oberfläche des hinteren Bereichs Rillen aufweist, die quer zu der Einpressrichtung des Führungselements angeordnet sind. Bei dieser Ausführungsform werden die einzelnen Vorteile beider Rillenausführungsformen in einem Führungselement vereint. So dient der vordere Bereich dazu, den Einpressvorgang insoweit zu erleichtern, als dass die reibungserzeugende Oberfläche des Führungselements verringert ist, so dass eine erleichtere Einpressbewegung möglich ist. Ferner dienen die parallel zu der Einpressrichtung verlaufenden Rillen des vorderen Bereichs der Führung des Führungselements innerhalb der Aufnahmeöffnung bei der Montage.

Der hintere Bereich mit den querverlaufenden Rillen hingegen dient der Sicherung des eingepressten Führungselements dadurch, dass das Material des Bremsträgers im Bereich der Aufnahmeöffnung infolge des wirkenden Drucks beim Einpressvorgang in die querverlaufenden Rillen fließt bzw. in dieses zurückfedert und nachfolgend eine Lösebewegung des eingepressten Führungselements verhindert. Zwischen dem vorderen und dem hinteren Bereich des zweiten Abschnitts können weitere anders ausgebildete Oberflächenstrukturen bzw. Bereiche mit einer Oberfläche ohne makroskopisch sichtbare Strukturierung angeordnet sein.

Um eine verbesserte Montierbarkeit zu gewährleisten kann vorgesehen sein, dass die strukturierte Oberfläche in einem Bereich der quer zu der Eintrittsrichtung angeordneten Rillen ein im Längsschnitt (bezüglich der Längsachse des Führungselements) betrachtet sägezahnartiges Profil aufweist, wobei die in Einpressrichtung vorderen Flanken des Sägezahnprofils länger ausgebildet sind als die hinteren Flanken. Durch die Ausbildung der längeren vorderen Flanken des Sägezahnprofils gegenüber den hinteren Flanken wird erreicht, dass die quer angeordneten Rillen fasenähnlich zu dem in Einpressrichtung hinteren Ende des Führungselements ansteigen und dadurch das Material der Aufnahmeöffnung mit zunehmendem Einpressweg nach außen drücken. Das nach außen gedrückte Material der Aufnahmeöffnung federt bei fortschreitender Einpressbewegung zurück bzw. fließt in die querverlaufenden Rillen und wirkt dadurch einem Lösen des Führungselements entgegen. Die Rillen wirken bei einer derartigen Profilierung wie Widerhaken, die bei einer Bewegung in entgegengesetzter Richtung zu der Einpressrichtung blockieren.

Es kann ebenfalls vorgesehen sein, dass die strukturierte Oberfläche in einem Bereich der parallel zu der Einpressrichtung angeordneten Rillen ein im achsorthogonalen Querschnitt betrachtet sägezahnartiges Profil aufweist. Der achsorthogonale Querschnitt liegt in einer Ebene, die senkrecht zu der Längsachse des Führungselements angeordnet ist. Ein derartiges Profil hat den zusätzlichen Vorteil, dass in Abhängigkeit von der gewählten Passung die Kontaktoberfläche und damit die Reibung zwischen dem Führungselement und der Aufnahmeöffnung linear zunimmt.

Als Passung wird eine Verbindung zweier ineinandergreifender Teile, beispielsweise das Führungselement und die Aufnahmeöffnung, bezeichnet, wobei beide Teile das gleiche Nennmaß aufweisen, d.h. der Innendurchmesser der Aufnahmeöffnung dem Außendurchmesser (maximalem Außendurchmesser im Bereich der parallel angeordneten Rillen) einander entsprechen. Jedoch können die beiden Maße des Innendurchmessers der Aufnahmeöffnung und des Außendurchmessers des Führungselements bezüglich ihres Ist-Maßes um einen bestimmten Toleranzbereich abweichen. Je nach dem, wie groß dieser gewählt wird, variiert auch die den Einpressvorgang erschwerende Reibungskraft, welche zugleich nach Abschluss der Montage das Einpresselement in seiner Aufnahme hält. Bei Einpresselementen allgemein wird eine Presspassung vorgesehen, d.h. der Außendurchmesser des Einpresselements ist im Wesentlichen größer als der Innendurchmesser der Aufnahmeöffnung, so dass nach dem Zusammensetzen eine Pressung infolge der vorhandenen Reibung zwischen den Teilen erhalten bleibt.

Je nach Gestaltung der Profilierung der jeweiligen Rillen steigt bei einer Erhöhung des Quotienten von Außendurchmesser des Führungselements gegenüber Innendurchmesser der Aufnahmeöffnung die Pressung linear oder nicht-linear an. Mit einem linearen Anstieg der Pressung ist beispielsweise bei dem sägezahnartigen Profil der Rillen zu rechnen, während bei alternativen Ausführungsformen, bei denen die Flanken nicht linear sind, auch ein nicht-linearer Anstieg der Pressung zu erwarten ist. Somit kann über die Gestaltung des Profils der Rillen (sowohl der quer als auch der längs der Einpressrichtung angeordneten Rillen) der Toleranzbereich der Presspassung variiert werden.

Es kann ferner vorgesehen sein, dass der vordere Bereich des zweiten Abschnitts einen kleineren Durchmesser als der hintere Bereich aufweist. Der Durchmesser bezeichnet hierbei den maximalen Außendurchmesser der strukturierten Oberfläche. Weiterhin kann die Aufnahmeöffnung des Bremsträgers als gestufte Bohrung ausgebildet sein. Diese korrespondiert bezüglich der Anordnung ihrer Stufen mit den aus den unterschiedlichen Durchmessern z.B. des umlaufenden Bundes und des zweiten Abschnitts bzw. des vorderen und hinteren Bereichs des zweiten Abschnitts resultierenden Abstufungen des Führungselements.

Weiterhin kann vorgesehen sein, dass der erste Abschnitt eine im Wesentlichen glatte Oberfläche aufweist. Diese dient bekanntermaßen der Abstützung der Bremsbelaganordnung und bedarf daher keiner besonderen Strukturierung der Oberfläche. Gleichermaßen ist jedoch eine Glättung oder Hohnung der Oberfläche nicht notwendig.

Zusätzlich kann vorgesehen sein, dass der erste Abschnitt des Führungselements einen kleineren Durchmesser als der zweite Abschnitt aufweist. Dabei ist vorteilhaft eine Übergangsfase zwischen dem ersten Abschnitt und dem zweiten Abschnitt angeordnet, deren Durchmesser sich von dem zweiten Abschnitt zu dem ersten Abschnitt hin verjüngt. Insbesondere diese Übergangsfase dient dazu, beim Einpressvorgang das Material der Aufnahmeöffnung elastisch nach außen zu drücken und bei fortschreitendem Einpressweg in die Strukturierung des zweiten Abschnitts zurückfedern bzw. fließen zu lassen. Zudem dient die Übergangsfase der Zentrierung des Führungselements während des Einpressvorgangs.

Um zu gewährleisten, dass das Material der Aufnahmeöffnung beim Einpressvorgang durch das Führungselement verformt wird, kann ferner vorgesehen sein, dass das Führungselement aus einem Material mit einer größeren Härte als das des Bremsträgers hergestellt ist. Sofern der Bremsträger nicht einteilig ausgebildet ist, ist zumindest darauf abzustellen, dass das Führungselement aus einem Material mit einer größeren Härte als das der Aufnahmeöffnung an dem Bremsträger hergestellt ist. So kann das Material der Aufnahmeöffnung beispielsweise Aluminium umfassen.

Zudem betrifft die vorliegende Erfindung ein Verfahren zum Herstellen einer Scheibenbremsanordnung, wobei die Scheibenbremsanordnung einen Bremsträger sowie eine Bremsbelaganordnung umfasst, das dadurch gekennzeichnet ist, dass zum Verbinden des Bremsträgers mit einem Führungselement mit den vorstehend genannten Merkmalen der Schritt des Einpressens des Führungselements in eine an dem Bremsträger vorgesehene Aufnahmeöffnung durchgeführt wird. Um das Führungselement in der Aufnahmeöffnung zusätzlich zu sichern, kann gegebenenfalls der in Einpressrichtung hintere Abschnitt der Aufnahmeöffnung zusätzlich verstemmt werden, so dass ein dadurch entstehender Vorsprung bzw. eine Wulst das in der Aufnahmeöffnung aufgenommene Führungselement gegen ein Herausfallen sichert. Während bei bekannten Herstellungs- und Montageverfahren von Scheibenbremsanordnungen das Führungselement in Form einer Bolzenschraube in eine an dem Bremsträger vorgesehene Aufnahmeöffnung eingeschraubt wird, wird bei dem vorliegenden Verfahren stattdessen der Schritt des Einpressens durchgeführt. Dies hat den Vorteil, dass die Aufnahmeöffnung nicht, wie im Stand der Technik, mit einem korrespondierenden Innengewinde versehen werden muss, wodurch die Herstellungskosten maßgeblich gesenkt werden können. So fällt zum einen der Fertigungsschritt Gewindeschneiden als solches weg, zum anderen sinkt jedoch auch das Risiko möglicher Ausschussteile (wenn das Gewinde nicht ordnungsgemäß geschnitten worden ist) und möglicher Nacharbeit.

Durch Verwendung eines Führungselements mit den vorstehend genannten Merkmalen, insbesondere einer strukturierten Oberfläche, wird gewährleistet, dass alternative Verfahrensschritte, wie sie allgemein aus dem Verfahren des Einpressens bekannt sind, beispielsweise Hohnen der zu verbindenden Teile, nicht notwendig sind. Die strukturierte Oberfläche ermöglicht einen vergrößerten Toleranzbereich bezüglich der vorzusehenden Presspassung zwischen Führungselement und Aufnahmeöffnung.

Die Erfindung wird im Folgenden beispielhaft anhand der beiliegenden Figuren erläutert. Es stellen dar:
- Fig. 1: eine perspektivische teilgeschnittene Ansicht einer erfindungsgemäßen Scheibenbremsanordnung;
- Fig. 2: eine Detailansicht des Ausschnitts A in Fig. 1; und
- Fig. 3: eine Seitenansicht eines Führungselements der erfindungsgemäßen Scheibenbremsanordnung gemäß den Fig. 1 und 2.

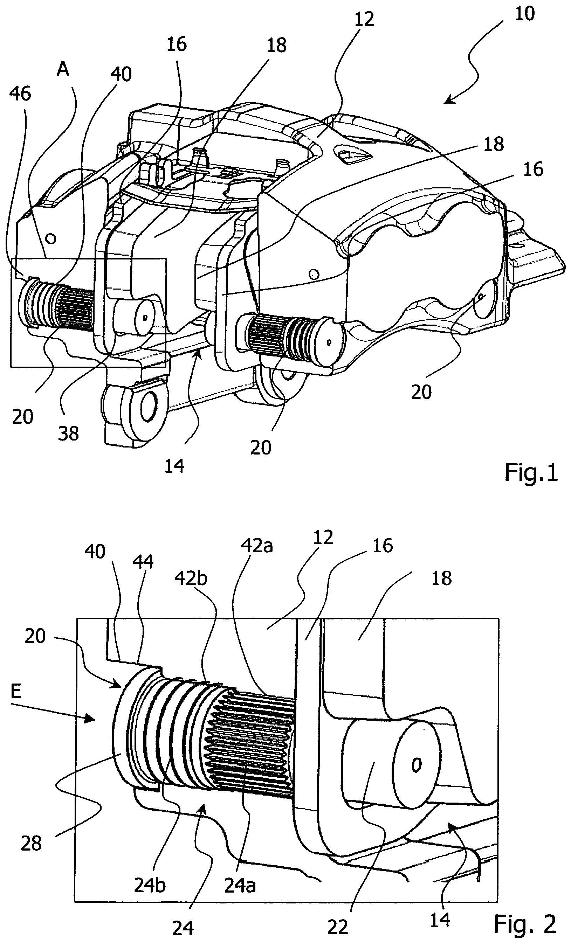

In Fig. 1 ist eine erfindungsgemäße Scheibenbremsanordnung in einer teilgeschnittenen perspektivischen Ansicht gezeigt und allgemein mit dem Referenzzeichen 10 bezeichnet. Die Scheibenbremsanordnung 10 weist einen Bremsträger 12 auf, der dazu dient, die Scheibenbremsanordnung 10 mit einem Fahrzeug zu verbinden, sowie eine Bremsbelaganordnung 14. Die Bremsbelaganordnung 14 umfasst die Tragplatten 16 und die darauf angeordneten Bremsbeläge 18. Führungselemente 20 (in Fig. 1 sind drei von vier gezeigt) sind in Aufnahmeöffnungen 40 an dem Bremsträger 12 aufgenommen und dienen zum Führen und Abstützen der Bremsbelaganordnung 14 der erfindungsgemäßen Scheibenbremsanordnung 10. Hierzu weist jedes der Führungselemente 20 einen ersten Abschnitt 22 auf, an dem die Bremsbelaganordnung 14 beispielsweise, wie in Fig. 1 gezeigt, über entsprechende Aufnahmeöffnungen 38 in den Tragplatten 16 geführt und abgestützt ist.

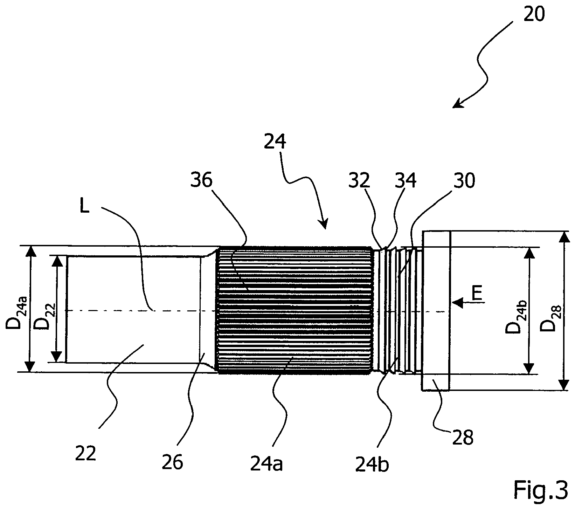

Wie in Fig. 2, einer Detailansicht des Ausschnitts A in Fig. 1, deutlich zu erkennen ist, weist das Führungselement 20 ferner einen zweiten Abschnitt 24 auf, dessen Oberfläche strukturiert ist. Bei den in den Fig. 1 bis 3 gezeigten Führungselementen 20 ist der zweite Abschnitt 24 in zwei Bereiche unterteilt, einem in einer Einpressrichtung E vorderen Bereich 24a und einen hinteren Bereich 24b. Der vordere Bereich 24a des zweiten Abschnitts 24 des Führungselements 20 weist an seinem Umfang Längsrillen 36 (vgl. Fig. 3) auf, die im Wesentlichen parallel zu der Einpressrichtung E des Führungselements 20 angeordnet sind. Der hintere Bereich 24b des zweiten Abschnitts 24 des Führungselements 20 hingegen weist Querrillen 30 an seiner Außenumfangsfläche auf, die quer zu der Einpressrichtung E des Führungselements 20 verlaufen.

Bei der in den Fig. 1 bis 3 dargestellten Ausführungsform sind die Querrillen 30 im Wesentlichen senkrecht zu der Einpressrichtung E angeordnet.

Durch die Längsrillen 36 weist die strukturierte Oberfläche des zweiten Abschnitts 24 in dem vorderen Bereich 24a eine Profilierung auf, die in einem achsorthogonalen Querschnitt (bezüglich der Längsachse L des Führungselements 20) einem Sägezahnprofil gleicht, wobei die Flanken des Sägezahnprofils in der gezeigten Ausführungsform im Wesentlichen gleich lang sind. Alternative Ausführungsformen zu dieser Profilierung sind jedoch ebenfalls denkbar, bei denen z.B. die Flanken konkav oder konvex ausgebildet sind. Gleichfalls können der Zahngrund wie auch die Zahnspitzen der Profilierung abgeflacht ausgebildet sein.

Die in Fig. 1 bis 3 dargestellte Ausführungsform ist insbesondere deshalb vorteilhaft, da die Längsrillen 36 zur Führung des Führungselements 20 in Richtung der Einpressrichtung E dienen und so ein Einpressen des Führungselements 20 in die Aufnahmeöffnung 40 erleichtern. Zudem nimmt die Pressung in Abhängigkeit von dem Verhältnis des maximalen Außendurchmessers D₂₄ₐ des vorderen Bereichs 24a gegenüber dem Innendurchmesser der Aufnahmebohrung 40 (direkt proportional) linear zu oder ab.

Wie in Fig. 3 gezeigt, ist an der strukturierten Oberfläche des hinteren Bereichs 24b des zweiten Abschnitts 24 des Führungselements 20 durch die Querrillen 30 ebenfalls eine Profilierung an dem Führungselement 20 ausgebildet. Dieses gleicht in Richtung der Längsachse L des Führungselements 20 betrachtet ebenfalls einem sägezahnartigen Profil, bei dem die in Einpressrichtung E vorderen Flanken 32 länger ausgebildet sind als die hinteren Flanken 34.

Durch eine derartige Ausbildung des sägezahnartigen Profils der strukturierten Oberfläche des hinteren Bereichs 24b des zweiten Abschnitts 24 des Führungselements 20 wird in Einpressrichtung E eine erleichterte Bewegung des Führungselements 20 in die Aufnahmebohrung 40 erreicht, während eine entgegengesetzte Bewegung durch die widerhakenähnliche Blockierung der Querrillen 30 verhindert oder zumindest erschwert wird. Somit dienen die Querrillen 30 insbesondere der Sicherung des Führungselements 20 in der Aufnahmeöffnung 40 an dem Bremsträger 12.

Der erste Abschnitt 22 weist, wie in Fig. 3 zu erkennen, einen kleineren Durchmesser D₂₂ auf als der zweite Abschnitt 24. Zwischen dem ersten Abschnitt 22 und dem zweiten Abschnitt 24 des Führungselements 20 ist daher eine Übergangsfase 26 vorgesehen, die zum Einen eine Zentrierung des einzupressenden zweiten Abschnitts 24 beim Einführen in die Aufnahmeöffnung 40 ermöglicht. Zum Anderen dient die Übergangsfase 26 dazu, das Material der Aufnahmeöffnung 40 während des Einpressvorgangs bereits elastisch nach außen zu verformen, um den Einpressvorgang zu erleichtern.

Weiterhin ist an dem Führungselement 20 an seinem in Einpressrichtung E hinteren Ende ein umlaufender Bund 28 vorgesehen, dessen Durchmesser D₂₈ größer ist als die Durchmesser D₂₄ₐ und D_{24b} des vorderen Bereichs 24a und des hinteren Bereichs 24b des zweiten Abschnitts 24. Der umlaufende Bund 28 dient dazu, den Einpressvorgang zu beenden bzw. abzubrechen, sobald der Bund 28 des Führungselements 20 in Anlage mit dem Bremsträger 12 gelangt. Insbesondere bei einer automatisierten Montage kann über eine entsprechende Sensorik bei Anlage des Bundes 28 auf dem Bremsträger 12 ein sprungartiger Anstieg der Montagekraft registriert werden, in dessen Folge der Einpressvorgang beendet wird.

Nachfolgend sollen anhand der Fig. 2 und 3 die Herstellung sowie die Montage eines Führungselements 20 in einer erfindungsgemäßen Scheibenbremsanordnung beschrieben werden. Das Führungselement 20 wird in einem ersten Fertigungsschritt als Rohling in Form eines Bolzens mit einer kreisrunden Querschnittsfläche ausgebildet, der in einem weiteren Fertigungsschritt zu einem gestuften Bolzen ausgeformt wird. Eine erste Stufe wird hierbei dadurch gebildet, dass der Durchmesser D₂₂ des ersten Abschnitts 22 kleiner ausgebildet ist als der Durchmesser des zweiten Abschnitts 24 bzw. der Durchmesser D₂₄ₐ des vorderen Bereichs 24a des zweiten Abschnitts 24. Eine weitere Stufe ist in der vorliegenden Ausführungsform des Führungselements 20 dadurch gebildet, dass der Durchmesser D₂₄ₐ des vorderen Bereichs 24a des zweiten Abschnitts 24 geringfügig kleiner ausgebildet ist als der Durchmesser D_{24b} des hinteren Bereichs 24b des zweiten Abschnitts 24 des Führungselements 20. Eine letzte Stufe bildet der umlaufende Bund 28, dessen Durchmesser D₂₈ größer ist als der Durchmesser des zweiten Abschnitts 24 bzw. der Durchmesser D_{24b} des hinteren Bereichs 24b des zweiten Abschnitts 24.

In einem dritten Fertigungsschritt wird der im montierten Zustand im Pressbereich befindliche zweite Abschnitt 24 des Führungselements 20 bis etwa zur Hälfte durch eine Matrize gezogen, welche die vormals im Wesentlichen glatte Mantelfläche in eine strukturierte, vorzugsweise zahnförmige Mantelfläche umformt. Dabei ist der maximale Außendurchmesser D₂₄ₐ des vorderen Bereichs 24a, der derartig umgeformt wird, im Wesentlichen unverändert, d.h. es werden nur Vertiefungen in Form von Längsrillen 36 eingeformt. Durch diese Längsrillen 36 im vorderen Bereich 24a des zweiten Abschnitts 24 des Führungselements 20 wird erreicht, dass sich dieser Bereich des Abschnitts 24 beim anschließenden axialen Einpressen in Einpressrichtung E in die Aufnahmeöffnung 40 des Bremsträgers 12 in diesen einfurchen kann. Dieses Einfurchen bringt gegenüber der herkömmlichen Presspassung den entscheidenden Vorteil, dass die Bauteiltoleranzen, d.h. das Verhältnis des Außendurchmessers des zweiten Abschnitts 24 gegenüber dem Innendurchmesser der Aufnahmeöffnung 40, signifikant größer ausfallen können als bei Presspartnern mit einer im Wesentlichen glatten Oberfläche. Dadurch wird der Herstellungsprozess wesentlich kostengünstiger.

In einem weiteren Fertigungsschritt wird zwischen dem ersten Abschnitt 22 und dem vorderen Bereich 24a des zweiten Abschnitts 24 des Führungselements 20 eine Übergangsfase 26 vorgesehen, die sicherstellt, dass sich der Pressabschnitt 24 des Führungselements 20 während des Einpressvorgangs bezüglich der Aufnahmeöffnung 40 im Bremsträger 12 automatisch zentriert.

Außerdem wird der hintere Bereich des zweiten Abschnitts 24 mit quer zur Längsachse L verlaufenden Vertiefungen bzw. Querrillen (30) versehen, deren Außendurchmesser D_{24b} im Wesentlichen dem Durchmesser des hinteren Bereichs 24b des gestuften Rohlings entspricht. Die Querrillen 30 sind dabei derart ausgebildet, dass die in Einpressrichtung E vorderen Flanken 32 der im Längsschnitt des Führungselements 20 erkennbaren Profilierung länger sind als die hinteren Flanken 34, so dass die Profilierung fasenähnlich in Richtung zu dem Bund 28 im Durchmesser ansteigend ausgebildet ist.

Beim Einpressen des Führungselements 20 wird zuerst der in seinem Durchmesser D₂₂ verminderte Abschnitt 22 in die Aufnahmeöffnung 40 eingeführt. Vorzugsweise besteht zwischen dem Außendurchmesser D₂₂ und dem Innendurchmesser der Aufnahmeöffnung 40 ausreichend Spiel, so dass die Einführbewegung ungehindert stattfinden kann. Mit zunehmendem Einführweg gelangt die Übergangsfase 26 in die Aufnahmeöffnung 40 und drückt das Material der Öffnung 40 elastisch nach außen. Zugleich wird eine Zentrierung des Führungselements 20 durch die Übergangsfase 26 erreicht.

Durch Aufbringen einer axialen Montagekraft werden dann der vordere Bereich 24a des zweiten Abschnitts 24 mit den Längsrillen 36 sowie der sich anschließende hintere Bereich 24b des zweiten Abschnitts 24 mit den Querrillen 30 in die Aufnahmeöffnung 40 eingepresst. Dabei furchen sich die Längsrillen 36 in die Aufnahmeöffnung ein und gehen dadurch einen Reib- und Formschluss mit dieser ein. Beim Einpressen des hinteren Bereichs 24b wird durch die fasenartige Profilierung der Querrillen 30 das Material der Bohrung erst elastisch nach außen gedrückt bzw. beginnt in Folge des Drucks zu fließen und federt bzw. fließt bei fortschreitendem Einpressen in die nachfolgende Querrille 30 zurück, wodurch ein axial wirkender Widerstand gegen ein Herausfallen des Führungselements 20 bewirkt wird.

Allgemein werden zudem durch Vorsehen der Querrillen 30 sowie der Längsrillen 36 der zulässige Toleranzbereich, d.h. das zulässige Verhältnis zwischen dem Außendurchmesser des zweiten Abschnitts 24 gegenüber dem Innendurchmesser der Auf nahmeöffnung 40, erweitert und die Herstellungskosten gegenüber dem Stand der Technik gesenkt.

Der sich an den hinteren Bereich 34b anschließende umlaufende Bund 28 begrenzt die maximale mögliche Einpresstiefe des Führungselements 20 in den Bremsträger 12 und ermöglicht eine automatisierte Montage, bei der durch einen mit Anlage des Bundes 28 an den Bremsträger 12 hervorgerufenen sprungartigen Anstieg der Montagekraft ein Abbruch der Montage veranlasst wird.

Wie in Fig. 2 weiter zu erkennen ist, ist je nach Ausgestaltung des Führungselements 20 auch eine entsprechende stufenförmige Ausbildung der Aufnahmeöffnung 40 in dem Bremsträger 12 vorteilhaft. So ist in der in Fig. 2 dargestellten Ausführungsform die Aufnahmeöffnung 40 mit zwei gestuften Abschnitten 42a, 42b, die jeweils mit dem vorderen Bereich 24a und dem hinteren Bereich 24b des zweiten Abschnitts 24 des Führungselements 20 korrespondieren, und einem dritten gestuften Abschnitt 44 versehen, der im Wesentlichen dem Außendurchmesser D₂₈ des umlaufenden Bunds 28 entspricht. Es kann jedoch je nach Ausgestaltung des Führungselements 20 und des Materials der Aufnahmeöffnung 40 auch möglich sein, die Aufnahmeöffnung 40 ungestuft zu lassen.

Zuletzt kann, wie in Fig. 1 gezeigt, das Führungselement 20 in der Aufnahmeöffnung 40 gegen ein Herausfallen in einer Richtung entgegengesetzt zur Einpressrichtung E gesichert werden, indem die Aufnahmeöffnung 40 abschließend an dem dritten gestuften Abschnitt 44 verstemmt wird, d.h. der Randbereich des dritten gestuften Abschnitts 44 derart plastisch verformt wird, dass sich ein Vorsprung bzw. eine Wulst 46 ausbildet, der bzw. die das Führungselement 20 in axialer Richtung sichert.

Das Material der Aufnahmeöffnung 40 ist hierbei weicher gestaltet als das des Führungselements 20; beispielsweise ist die Aufnahmeöffnung 40 bzw. der Bremsträger 12 der dargestelltem Ausführungsform der Fig. 1 bis 3 aus Aluminium hergestellt. Sobald die Führungselemente 20 an dem Bremsträger 12 angebracht sind, wird die Bremsbelaganordnung 14 an der erfindungsgemäßen Scheibenbremsanordnung 10 vorgesehen.

Im Unterschied zu herkömmlichen Scheibenbremsanordnungen wird bei der erfindungsgemäßen Scheibenbremsanordnung 10 das Führungselement 20 in eine an dem Bremsträger 12 angeordnete Aufnahmeöffnung 40 eingepresst. Hierdurch ist das Vorsehen eines Gewindegangs an der Aufnahmeöffnung 40 ebenso wenig notwendig wie das zusätzliche Vorsehen einer Sicherung dieser Schraubverbindung. Weiterhin bietet das erfindungsgemäße Verfahren zum Herstellen einer Scheibenbremsanordnung den Vorteil, dass zum Verbinden des Bremsträgers 12 mit einem Führungselement 20 nur der Schritt des Einpressens des Führungselements 20 in einer an dem Bremsträger 12 vorgesehenen Aufnahmeöffnung 40 durchgeführt wird. Zusätzliche Bearbeitungsschritte zur Vorbereitung der Aufnahmeöffnung 40, wie beispielsweise Glätten oder Hohnen der Innenumfangsfläche sind infolge der strukturierten Oberfläche des Pressabschnitts 24 des Führungselements 20 nicht notwendig.

Somit bietet die vorliegende Erfindung die Vorteile einer kostengünstigen und einfachen Herstellung einer Scheibenbremsanordnung.

## Patentansprüche

1. Scheibenbremsanordnung (10) umfassend einen Bremsträger (12) zur Befestigung an einem Fahrzeug sowie eine Bremsbelaganordnung (14), wobei der Bremsträger (12) wenigstens eine Aufnahmeöffnung (40) zur Aufnahme eines Führungselements (20) aufweist, das einen ersten Abschnitt (22) zum Führen und Abstützen der Bremsbelaganordnung (14) und einen zweiten Abschnitt (24) zum Verbinden mit dem Bremsträger (12) hat, wobei der zweite Abschnitt (24) eine strukturierte Oberfläche aufweist, mit der das Führungselement (20) wenigstens teilweise in die Aufnahmeöffnung (40) einpressbar ist,
**dadurch gekennzeichnet, dass**
die strukturierte Oberfläche des zweiten Abschnitts (24) Rillen (30) aufweist, die quer zu der Einpressrichtung (E) des Führungselements (20) angeordnet sind.

2. Scheibenbremsanordnung (10) nach Anspruch 1,
**dadurch gekennzeichnet, dass** das Führungselement (20) einen im wesentlichen kreisförmigen achsorthogonalen Querschnitt aufweist.

3. Scheibenbremsanordnung (10) nach einem der Ansprüche 1 bis 2,
**dadurch gekennzeichnet, dass** die strukturierte Oberfläche des zweiten Abschnitts (24) Rillen aufweist, die parallel zu der Einpressrichtung (E) des Führungselements (20) angeordnet sind.

4. Scheibenbremsanordnung (10) nach einem der Ansprüche 1 bis 2,
**dadurch gekennzeichnet, dass** das Führungselement (20) an einem in der Einpressrichtung (E) betrachtet hinteren Ende einen umlaufenden Bund (28) aufweist.

5. Scheibenbremsanordnung (10) nach einem der vorhergehenden Ansprüche,
**dadurch gekennzeichnet, dass** der zweite Abschnitt (24) wenigstens einen in der Einpressrichtung (E) vorderen Bereich (24a) und einen hinteren Bereich (24b) aufweist, wobei die strukturierte Oberfläche des vorderen Bereichs (24a) Rillen (36) aufweist, die parallel zu der Einpressrichtung (E) des Führungselements (20) angeordnet sind, während die strukturierte Oberfläche des hinteren Bereichs (24b) Rillen (30) aufweist, die quer zu der Einpressrichtung (E) des Führungselements (20) angeordnet sind.

6. Scheibenbremsanordnung (10) nach einem der Ansprüche 3 bis 5,
**dadurch gekennzeichnet, dass** die strukturierte Oberfläche in einem Bereich der quer zu der Einpressrichtung (E) angeordneten Rillen (30) ein im achsorthogonalen Querschnitt betrachtet sägezahnartiges Profil aufweist.

7. Scheibenbremsanordnung (10) nach Anspruch 3 oder einem der Ansprüche 4 bis 6 und Anspruch 3,
**dadurch gekennzeichnet, dass** die strukturierte Oberfläche in einem Bereich der parallel zu der Einpressrichtung (E) angeordneten Rillen (36) ein im Längsschnitt betrachtet sägezahnartiges Profil aufweist, wobei die in Einpressrichtung (E) vorderen Flanken (32) des sägezahnartigen Profils länger ausgebildet sind als die hinteren Flanken (34).

8. Scheibenbremsanordnung (10) nach einem der Ansprüche 5 bis 7,
**dadurch gekennzeichnet, dass** der vordere Bereich (24a) des zweiten Abschnitts (24) einen geringeren Durchmesser (D₂₄ₐ) als der hintere Bereich (24b) aufweist.

9. Scheibenbremsanordnung (10) nach einem der Ansprüche 4 bis 8,
**dadurch gekennzeichnet, dass** die Aufnahmeöffnung (40) des Bremsträgers (12) als gestufte Bohrung ausgebildet ist.

10. Scheibenbremsanordnung (10) nach einem der vorhergehenden Ansprüche,
**dadurch gekennzeichnet, dass** der erste Abschnitt (22) eine im wesentlichen glatte Oberfläche aufweist.

11. Scheibenbremsanordnung (10) nach einem der vorhergehenden Ansprüche,
**dadurch gekennzeichnet, dass** der erste Abschnitt (22) des Führungselements (20) einen geringeren Durchmesser (D₂₂) als der zweite Abschnitt (24) aufweist.

12. Scheibenbremsanordnung (10) nach Anspruch 11,
**dadurch gekennzeichnet, dass** zwischen dem ersten Abschnitt (22) und dem zweiten Abschnitt (24) eine Übergangsfase (26) angeordnet ist, deren Durchmesser sich von dem zweiten Abschnitt (24) zu dem ersten Abschnitt (22) hin verjüngt.

13. Scheibenbremsanordnung (10) nach einem der vorhergehenden Ansprüche,
**dadurch gekennzeichnet, dass** das Führungselement (20) aus einem Material mit einer größeren Härte als das des Bremsträgers (12) hergestellt ist.

14. Verfahren zum Herstellen einer Scheibenbremsanordnung (10), wobei die Scheibenbremsanordnung (10) einen Bremsträger (12) sowie eine Bremsbelaganordnung (14) umfasst,
**dadurch gekennzeichnet, dass** zum Verbinden des Bremsträgers (12) mit einem Führungselement (20) nach einem der Ansprüche 1 bis 12 der Schritt des Einpressens des Führungselements (20) in eine an dem Bremsträger (12) vorgesehene Aufnahmeöffnung (40) durchgeführt wird.

## Claims

1. Disk brake assembly (10) comprising a brake anchor plate (12) for fastening to a vehicle as well as a brake pad assembly (14), wherein the brake anchor plate (12) has at least one location opening (40) for receiving a guide element (20) that has a first portion (22) for guiding and supporting the brake pad assembly (14) and a second portion (24) for connecting to the brake anchor plate (12), wherein the second portion (24) has a textured surface, by which the guide element (20) may be press-fitted at least partially into the location opening (40), **characterized in that** the textured surface of the second portion (24) comprises grooves (30) that are disposed transversely of the press-in direction (E) of the guide element (20).

2. Disk brake assembly (10) according to claim 1,
**characterized in that** the guide element (20) has a substantially circular cross section orthogonal to the axis.

3. Disk brake assembly (10) according to any of claims 1 to 2,
**characterized in that** the textured surface of the second portion (24) comprises grooves that are disposed parallel to the press-fit direction (E) of the guide element (20).

4. Disk brake assembly (10) according to any of claims 1 to 2,
**characterized in that** the guide element (20) on a, viewed in the press-fit direction (E), rear end has a circumferential collar (28).

5. Disk brake assembly (10) according to any of the preceding claims,
**characterized in that** the second portion (24) comprises at least one, in the press-fit direction (E), front region (24a) and one rear region (24b), wherein the textured surface of the front region (24a) comprises grooves (36) that are disposed parallel to the press-fit direction (E) of the guide element (20), while the textured surface of the rear region (24b) comprises (30) grooves that are disposed transversely of the press-fit direction (E) of the guide element (20).

6. Disk brake (10) assembly according to any of claims 3 to 5,
**characterized in that** the textured surface in a region of the grooves (30) disposed transversely of the press-in direction (E) has a profile that, viewed in the cross section orthogonal to the axis, is sawtooth-like.

7. Disk brake (10) assembly according to claim 3 or any of claims 4 to 6 and claim 3,
**characterized in that** the textured surface in a region of the grooves (36) disposed parallel to the press-in direction (E) has a profile that, viewed in the longitudinal section, is sawtooth-like, wherein the, in press-in direction (E), front flanks (32) of the sawtooth-like profile are configured longer than the rear flanks (34).

8. Disk brake assembly (10) according to any of claims 5 to 7,
**characterized in that** the front region (24a) of the second portion (24) has a smaller diameter (D₂₄ₐ) than the rear region (24b).

9. Disk brake assembly (10) according to any of claims 4 to 8,
**characterized in that** the location opening (40) of the brake anchor plate (12) is configured as a stepped bore.

10. Disk brake assembly (10) according any of the preceding claims,
**characterized in that** the first portion (22) has a substantially smooth surface.

11. Disk brake assembly (10) according to any of the preceding claims,
**characterized in that** the first portion (22) of the guide element (20) has a smaller diameter (D₂₂) than the second portion (24).

12. Disk brake assembly (10) according to claim 11,
**characterized in that**, disposed between the first portion (22) and the second portion (24) is a transition chamfer (26), the diameter of which diminishes from the second portion (24) in the direction towards the first portion (22).

13. Disk brake assembly (10) according to any of the preceding claims,
**characterized in that** the guide element (20) is manufactured from a material of a greater hardness than that of the brake anchor plate (12).

14. Method of manufacturing a disk brake assembly (10), wherein the disk brake assembly (10) comprises a brake anchor plate (12) as well as a brake pad assembly (14),
**characterized in that**, in order to connect the brake anchor plate (12) to a guide element (20) according to any of claims 1 to 12, the step of pressing-in the guide element (20) into a location hole (40) provided in the brake anchor plate (12) is carried out.

## Revendications

1. Ensemble frein à disque (10) comprenant un support de frein (12) destiné à être fixé sur un véhicule ainsi qu'un ensemble garniture de frein (14), dans lequel le support de frein (12) présente au moins une ouverture de réception (40) destinée à recevoir un élément de guidage (20) qui comporte une première partie (22) pour guider et soutenir l'ensemble garniture de frein (14) et une seconde partie (24) destinée à être reliée au support de frein (12), la seconde partie (24) présentant une surface structurée par laquelle l'élément de guidage (20) peut être enfoncé au moins partiellement dans l'ouverture de réception (40),
**caractérisé en ce que**
la surface structurée de la seconde partie (24) présente des rainures (30) qui sont disposées transversalement à la direction d'enfoncement (E) de l'élément de guidage (20).

2. Ensemble frein à disque (10) selon la revendication 1,
**caractérisé en ce que** l'élément de guidage (20) présente une section transversale sensiblement circulaire et orthogonale à l'axe.

3. Ensemble frein à disque (10) selon l'une des revendications 1 à 2,
**caractérisé en ce que** la surface structurée de la seconde partie (24) comprend des rainures disposées parallèlement à la direction d'enfoncement (E) de l'élément de guidage (20).

4. Ensemble frein à disque (10) selon l'une des revendications 1 à 2,
**caractérisé en ce que** l'élément de guidage (20) comprend une collerette périphérique (28) à une extrémité arrière vue dans la direction d'enfoncement (E).

5. Ensemble frein à disque (10) selon l'une des revendications précédentes,
**caractérisé en ce que** la seconde partie (24) comprend au moins une zone avant (24a) et une zone arrière (24b) dans la direction d'enfoncement (E), la surface structurée de la zone avant (24a) comprenant des rainures (36) disposées parallèlement à la direction d'enfoncement (E) de l'élément de guidage (20), tandis que la surface structurée de la zone arrière (24b) comprend des rainures (30) disposées transversalement à la direction d'enfoncement (E) de l'élément de guidage (20).

6. Ensemble frein à disque (10) selon l'une des revendications 3 à 5,
**caractérisé en ce que** la surface structurée présente, dans une zone des rainures (30) disposées transversalement à la direction d'enfoncement (E), un profil en dents de scie vu dans la section transversale orthogonale à l'axe.

7. Ensemble frein à disque (10) selon la revendication 3 ou l'une des revendications 4 à 6 et la revendication 3,
**caractérisé en ce que** la surface structurée présente, dans une zone des rainures (36) disposées parallèlement à la direction d'enfoncement (E), un profil en dents de scie vu en coupe longitudinale, les flancs avant (32) dans la direction d'enfoncement (E) du profil en dents de scie étant réalisés plus longs que les flancs arrière (34).

8. Ensemble frein à disque (10) selon l'une des revendications 5 à 7,
**caractérisé en ce que** la zone avant (24a) de la seconde partie (24) présente un diamètre (D₂₄ₐ) qui est plus petit que la zone arrière (24b).

9. Ensemble frein à disque (10) selon l'une des revendications 4 à 8,
**caractérisé en ce que** l'ouverture de réception (40) du support de frein (12) est réalisée sous la forme d'un perçage étagé.

10. Ensemble frein à disque (10) selon l'une des revendications précédentes,
**caractérisé en ce que** la première partie (22) présente une surface sensiblement lisse.

11. Ensemble frein à disque (10) selon l'une des revendications précédentes,
**caractérisé en ce que** la première partie (22) de l'élément de guidage (20) présente un diamètre (D₂₂) qui est plus petit que la seconde partie (24).

12. Ensemble frein à disque (10) selon la revendication 11,
**caractérisé en ce qu'**entre la première partie (22) et la seconde partie (24) est disposé un chanfrein de transition (26) dont le diamètre diminue de la seconde partie (24) vers la première partie (22).

13. Ensemble frein à disque (10) selon l'une des revendications précédentes,
**caractérisé en ce que** l'élément de guidage (20) est fabriqué à partir d'un matériau d'une plus grande dureté que celui du support de frein (12).

14. Procédé de fabrication d'un ensemble frein à disque (10), dans lequel ledit ensemble frein à disque (10) comprend un support de frein (12) et un ensemble garniture de frein (14),
**caractérisé en ce que** pour relier le support de frein (12) à un élément de guidage (20) selon l'une des revendications 1 à 12, on effectue l'étape consistant à enfoncer l'élément de guidage (20) dans une ouverture de réception (40) prévue sur le support de frein (12).
